# FASCICULE DE BREVET EUROPEEN

(11) **EP 2 754 613 B1**
(45) Date de publication et mention de la délivrance du brevet: **21.09.2016**
(21) Numéro de dépôt: 14150521.4
(22) Date de dépôt: 09.01.2014
(51) Int. Cl.: B64F 1/22

(54) **Dispositif de manutention pour aéronef, notamment pour hélicoptère**
Handhabungsvorrichtung für Luftfahrzeuge, insbesondere für Hubschrauber
Aircraft handling device, in particular for a helicopter

(30) Priorité: 09.01.2013 FR 1350181
(43) Date de publication de la demande: 16.07.2014
(73) Titulaire: DCNS, 75015 Paris (FR)
(72) Inventeur: Raspic, Pierre, 16000 ANGOULEME (FR); Baury, Alexandre, 16000 ANGOULEME (FR); Bosch, Fabrice, 16000 ANGOULEME (FR)
(74) Mandataire: Lavoix

(56) Documents cités:
- WO-A1-03/070569
- US-A- 3 154 162
- US-A1- 2004 059 497
- US-A1- 2010 140 392
- US-A1- 2012 061 521

## Description

La présente invention concerne un dispositif de manutention pour aéronef, notamment pour hélicoptère.

Plus particulièrement, l'invention concerne un dispositif de manutention pour aéronef comprenant au moins une roulette de nez et étant situé sur une aire d'atterrissage ou d'appontage, le dispositif de manutention comprenant :
- une piste agencée sur l'aire d'atterrissage ou d'appontage,
- un chariot déplaçable sur la piste et adapté pour déplacer l'aéronef sur la piste, et
- un plateau tournant pour la réception de la roulette de nez, le plateau tournant étant agencé sur le chariot et étant monté pivotant par rapport au chariot, de sorte que le plateau et la roulette de nez sont orientables par rapport au chariot et à la piste,
le chariot comprenant en outre une embase de guidage pour le guidage du chariot sur la piste et une base de support sur laquelle le plateau tournant est disposé.

Il est ainsi connu de US 2012/061521 A1, US 2010/140392 A1 et WO 03/070569 A1 un tel dispositif de manutention pour déplacer les aéronefs comme les hélicoptères entre une zone d'appontage située sur un pont d'un navire ou une zone d'atterrissage, et une zone de stockage, et inversement, la préhension et la traction des hélicoptères étant réalisées via leur roulette de nez.

En se déplaçant, le chariot déplace alors l'hélicoptère.

Toutefois, le déplacement d'un hélicoptère par sa roulette de nez se traduit par des efforts importants appliqués à cette dernière. Ces efforts peuvent alors être amplifiés par les mouvements du pont induits par l'agitation de la mer lorsque le dispositif de manutention est embarqué à bord d'un navire.

Or, du fait de la constitution des aéronefs modernes en matériaux composites, il existe des limitations mécaniques importantes aux efforts qui peuvent être appliqués à leur roulette de nez, ainsi qu'aux directions selon lesquelles ces efforts peuvent être appliqués.

Pour certains appareils, ces limitations sont tout simplement incompatibles avec leur manutention au moyen des dispositifs de manutention connus.

L'un des objets de l'invention est donc de résoudre ce problème.

A cet effet, l'invention concerne un dispositif de manutention selon la revendication 1.

Selon d'autres aspects de l'invention, le dispositif de manutention comprend une ou plusieurs des caractéristiques optionnelles des revendications 2 à 10.

L'invention sera mieux comprise à la lecture de la description détaillée qui va suivre, donnée uniquement à titre d'exemple et faite en se référant aux Figures annexées sur lesquelles :
- la Figure 1 est une représentation schématique d'un dispositif de manutention selon l'invention ;
- la Figure 2 est une vue en perspective d'un chariot du dispositif de manutention de la Figure 1 ;
- les Figures 3 à 10 sont des vues analogues à celle de la Figure 1 et illustrent le fonctionnement du dispositif de manutention de la Figure 1.

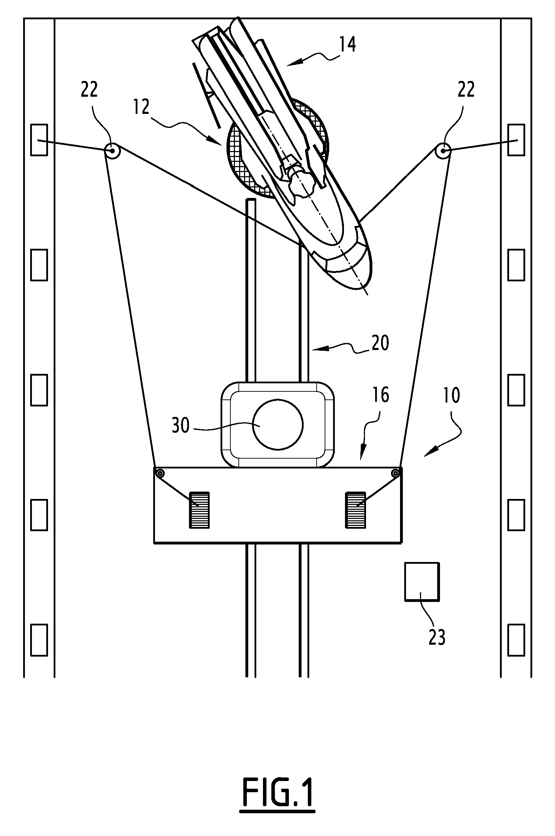

En référence à la Figure 1, un dispositif de manutention 10 selon l'invention, ci-après dispositif 10, est intégré à une zone d'appontage ou d'atterrissage 12 pour aéronef 14, et plus spécifiquement pour hélicoptère comprenant au moins une roulette de nez comportant des roues pneumatiques montées sur un moyeu.

Comme indiqué précédemment, certains hélicoptères modernes présentent une relative fragilité au niveau de leur roulette de nez. Notamment, pour certains hélicoptères, particulièrement lorsque ces hélicoptères appontent sur un navire par mer agitée, cette relative fragilité de la roulette de nez rend délicate leur traction par application d'un effort dirigé autrement que parallèlement aux plans des roues. Par exemple, un effort dirigé selon l'axe du moyeu de la roulette de nez est proscrit sur certains hélicoptères.

Le dispositif 10 est adapté pour être embarqué à bord d'un navire, la zone d'appontage ou d'atterrissage 14 étant une zone d'appontage située sur un pont du navire. Le dispositif 10 peut également être intégré à une zone d'atterrissage et d'envol classique.

Dans ce qui suit, l'invention est décrite de façon non limitative pour un dispositif 10 embarqué à bord d'un navire.

Le dispositif 10 comprend un chariot 16 et une piste 20 comprenant des rails 21 parallèles. En outre, le dispositif 10 comprend des poulies de renvoi 22, ci-après poulies 22, ainsi qu'un pupitre de commande 23. Enfin, le dispositif 10 comprend un système de traction (non représenté) du chariot sur la piste 20.

La piste 20 s'étend suivant une ligne, ici une ligne rectiligne.

Le chariot 16 est monté coulissant dans les rails 21 et est déplaçable le long de la piste 20.

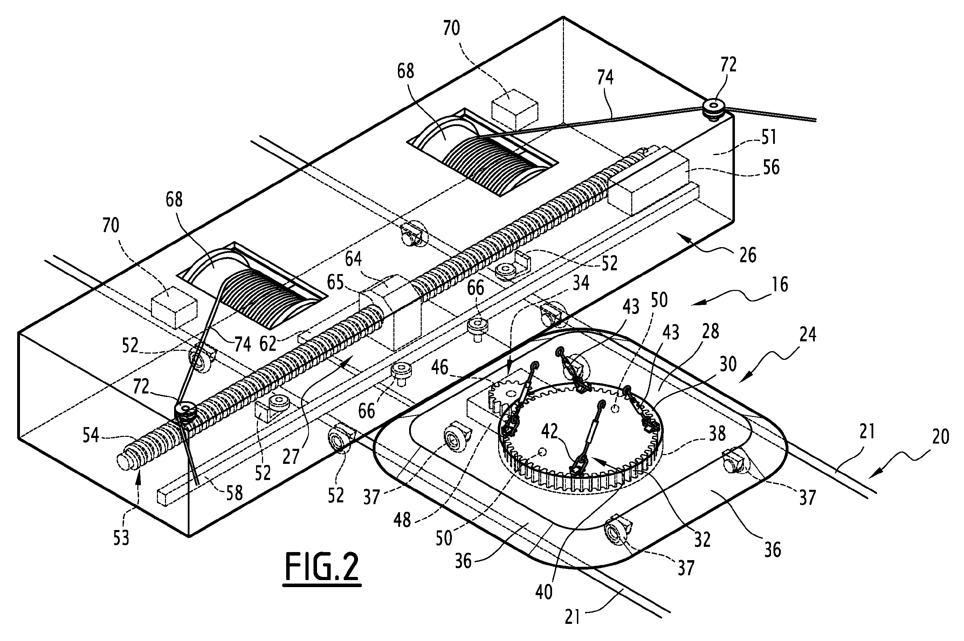

En référence à la Figure 2, le chariot 16 comprend une base de support 24, ci-après base 24, destinée à la réception de la roulette de nez de l'hélicoptère, une embase de guidage 26, ci-après embase 26, assurant le guidage du chariot 16 sur la piste 20, ainsi que des moyens de déplacement 27 de la base 24 par rapport à l'embase 26. En outre, le chariot 16 comprend un plateau tournant 30, ci-après plateau 30, et des moyens d'entraînement 34 pour l'entraînement en rotation du plateau tournant 30.

La base 24 comprend une surface centrale 28, des pentes inclinées 36 et des roues de support 37.

La surface centrale 28 est sensiblement plane et rectangulaire. La surface centrale 28 est surélevée par rapport à la piste 20 et au pont du navire.

La surface centrale 28 présente un orifice central 38 (en pointillés sur la Figure 2) sensiblement cylindrique dans lequel le plateau 30 est agencé.

Les pentes inclinées 36 sont respectivement situées sur l'un des bords périphériques de la base 24 et s'étendent entre le pont du navire et la surface centrale 28.

La présence des pentes inclinées 36 a pour effet de faciliter la montée et la descente de la roulette de nez sur la base 24, et la mise en place de la roulette de nez sur le dispositif 10 de façon générale.

Les roues de support 37 sont fixées sous la base 24 aux coins de la base 24 et portent une partie du poids de la base 24. Dans l'exemple de la Figure 2, la base 24 comprend quatre roues de support 37.

Les roues de support 37 sont propres à permettre le déplacement de la base 24 longitudinalement suivant la direction de la piste 20, mais aussi perpendiculairement à la piste 20.

Dans l'exemple de la Figure 2, les roues de support 37 se présentent sous la forme de roues folles.

Le plateau 30 présente une forme générale discoïdale de diamètre légèrement inférieur au diamètre de l'orifice central 38. Le plateau 30 est disposé dans l'orifice central 38.

Le plateau 30 est monté pivotant par rapport au chariot 16. Plus spécifiquement, le plateau 30 est monté pivotant par rapport à la base 24 via les moyens d'entraînement 34, comme on le verra par la suite.

Le plateau 30 comporte des moyens de fixation 40 pour la fixation de la roulette de nez sur le plateau 30.

Dans l'exemple de la Figure 2, les moyens de fixation 40 comportent plusieurs anneaux d'ancrage 42 fixés sur la périphérie du plateau 30 ainsi que des crochets 43 ajustables respectivement rapportés aux anneaux d'ancrage 42.

Dans l'exemple de la Figure 2, les moyens de fixation 40 comprennent quatre anneaux d'ancrage 42 associés deux à deux.

En variante, les moyens de fixation 40 comportent une ou plusieurs cales magnétiques en complément ou en lieu et place des anneaux d'ancrage 42 et des crochets 43.

Les moyens d'entraînement 34 comprennent une couronne dentée 32 solidaire du plateau 30, un pignon denté 46, et un moteur 48 propre à entraîner en rotation le pignon denté 46. Ils comprennent en outre des capteurs de position angulaire 50, ci-après capteurs 50, fixés sur la couronne dentée 32.

La couronne dentée 32 est disposée dans l'orifice central 38 sous le plateau 30, et est solidaire en rotation de celui-ci. Cette solidarisation est par exemple réalisée au moyen de doigts portés par le plateau 30 et engagés dans des orifices correspondants ménagés dans la couronne dentée 32, ou inversement.

Le pignon denté 46 est en prise avec la couronne dentée 32, de sorte que la rotation du pignon denté 46 entraîne la rotation de la couronne dentée 32, et inversement.

Le moteur 48 est raccordé au pignon denté 46 et est commandable à distance via le pupitre de commande 23 pour réaliser la rotation du pignon denté 46, et donc la rotation de la couronne dentée 32 et du plateau 30.

Les capteurs 50 fournissent une information de position angulaire de la couronne dentée 32 au pupitre de commande 23. L'information est alors utilisée par un opérateur pour l'aider à la commande de la rotation du pignon denté 46, et avec lui la rotation du plateau 30.

Les capteurs 50 sont par exemple des capteurs de fin de course indiquant que la couronne dentée 32 se trouve dans une position de butée dans l'un des deux sens de rotation.

L'embase 26 est propre à permettre le déplacement du chariot 16 sur la piste 20.

A cet effet, l'embase 26 comprend deux montants 51 latéraux qui délimitent l'embase 26 latéralement, et des galets 52.

Les montants 51 sont disposés de part et d'autre de l'embase 26 et rigidifient la structure de l'embase 26.

Les galets 52 sont fixés sous l'embase 26 et permettent le maintien du chariot 16 sur la piste 20 latéralement et verticalement.

A cet effet, les galets 52 sont engagés dans les rails 21 de la piste 20, de sorte qu'ils guident l'embase 26 sur la piste 20.

Parmi les galets 52, certains sont disposés verticalement et maintiennent le chariot 16 dans les rails 21 de la piste 20 verticalement. Les autres galets 52 sont disposés horizontalement et maintiennent le chariot 16 dans les rails 21 latéralement.

En outre, l'embase 26 est propre à permettre, conjointement aux moyens de déplacement 27, le déplacement relatif de la base 24 par rapport à l'embase 26 perpendiculairement à la piste 20.

A cet effet, l'embase 26 comprend des moyens de guidage 53 pour le guidage de la base 24 par rapport à l'embase 26.

Les moyens de guidage 53 comprennent une vis mère 54, un actionneur 56 de la vis mère 54 et un rail de guidage 58.

La vis mère 54 est fixée à l'un et l'autre des montants 51 perpendiculairement à la piste 20 et est propre à pivoter autour de son axe sous l'effet de l'actionneur 56.

L'actionneur 56 est fixé à l'un des montants 51 et est commandable à distance via le pupitre de commande 23. Dans l'exemple de la Figure 2, l'actionneur 56 est un moteur.

Le rail de guidage 58 s'étend entre les montants 51 perpendiculairement à la piste 20 et est destiné à assurer le guidage du déplacement de la base 24 par rapport à l'embase 26, comme on le verra par la suite.

En pratique, l'embase 26 comprend également un coffrage dans lequel les éléments précédemment décrits sont disposés, ainsi qu'un plancher rigide sous lequel les galets 52 sont fixés.

Les moyens de déplacement 27 autorisent la translation de la base 24 par rapport à l'embase 26 et ce perpendiculairement aux rails 21 et à la piste 20.

Les moyens de déplacement 27 comprennent une plaque de fixation 62, un écrou 64, et des palets pivotants 66.

La plaque de fixation 62 est fixée à la base 24. Dans l'exemple de la Figure 2, la plaque de fixation 62 est fixée sous la base 24 et porte une partie du poids de la base 24.

L'écrou 64 est fixé à la plaque de fixation 62.

L'écrou 64 comprend un orifice de guidage 65 présentant un pas de vis (non représenté) complémentaire de celui de la vis mère 54. L'écrou 64 est fixé sur la plaque de fixation 62 de sorte que l'orifice de guidage 65 soit orienté perpendiculairement à la piste 20. L'orifice de guidage 65 reçoit la vis mère 54.

Les palets pivotants 66 sont disposés horizontalement et sont en appui contre le rail de guidage 58 de l'embase 26. Les palets pivotants 66 roulent le long du rail de guidage 58 lorsque la base 24 se déplace par rapport à l'embase 26 et perpendiculairement à la piste 20. Ceci a pour effet de guider et faciliter le déplacement de la base 24 par rapport à l'embase 26.

Ainsi, via les moyens de déplacement 27 et les moyens de guidage 53 portés par l'embase 26, et plus spécifiquement via l'engagement de la vis mère 54 dans l'écrou 64 et l'actionnement de la vis mère 54 en rotation par l'actionneur 56, la base 24 est déplaçable par rapport à l'embase 26 perpendiculairement aux rails 21 et à la piste 20.

Ceci a pour effet de faciliter le recentrage de l'hélicoptère lors du déplacement du chariot 16 le long de la piste 20, comme on le verra par la suite.

Toujours en référence aux Figures 1 et 2, le chariot 16 est propre à permettre l'orientation de l'hélicoptère dont le dispositif réalise la manutention, et à se déplacer dans les rails 21 sur la piste 20.

Le chariot 16 comprend deux treuils 68, deux modules de limitation d'effort 70, ainsi que des poulies 72.

Les treuils 68 comprennent chacun un câble 74. Les câbles 74 sont destinés à la manutention, et plus particulièrement à l'orientation de l'hélicoptère, comme on le verra par la suite.

Les câbles 74 sont respectivement enroulés sur le treuil 68 correspondant. Chaque câble 74 est fixé par l'une de ses extrémités au treuil 68, et présente un organe de fixation (non représenté) à son autre extrémité.

Les modules de limitation d'effort 70 sont respectivement couplés à l'un des treuils 68 et sont configurés pour mesurer et limiter l'effort que le treuil 68 applique sur le câble 74 correspondant, et donc sur l'hélicoptère.

Ceci a pour effet de prévenir la dégradation de la structure de l'hélicoptère lors de son orientation via les câbles 74.

Les poulies 72, au même titre que les poulies de renvoi 22 situées sur le pont du navire, permettent de modifier la direction locale du câble tout en conservant l'effort que le treuil 68 lui applique.

Les poulies 72 sont respectivement associées à l'un des treuils 68. Dans l'exemple de la Figure 2, elles sont au nombre de deux.

Les poulies 72 sont respectivement fixées sur la partie supérieure du chariot 16, et sont excentrées par rapport aux treuils 68.

La disposition des treuils 68 et poulies 72 sur le chariot 16 a pour effet de minimiser le nombre de poulies et de treuils requis aux abords de la zone d'appontage 12 pour réaliser l'orientation de l'hélicoptère. Cette zone du pont est alors plus dégagée et donc plus sûre. En outre, habituellement, les treuils sont disposés dans des cavités ménagées aux abords de la zone d'appontage 12. Selon l'invention, cette zone est donc de conception simplifiée.

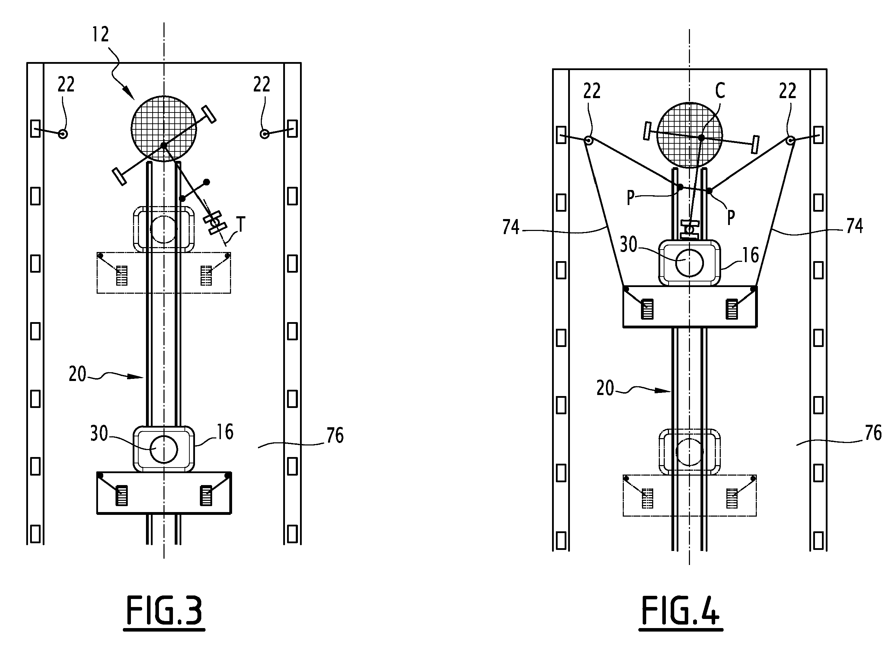

Comme indiqué précédemment, la piste 20 comprend des rails 21 parallèles. Les rails 21 s'étendent entre la zone d'appontage 12 et une zone de stockage 76 (Figure 3) des hélicoptères, telle un hangar.

Les rails 21 sont encastrés dans le pont du navire et coopèrent avec les galets dont le chariot 16 est pourvu, afin de guider et maintenir le chariot 16 sur la piste 20.

En variante, les rails 21 sont simplement fixés ou posés sur le pont du navire.

La présence des rails 21 et de la piste 20 prévient le dérapage du chariot 16 sur le pont du navire sous l'effet du poids de l'hélicoptère et des mouvements du navire induits par la mer.

Les poulies de renvoi 22 sont fixées sur le pont du navire de part et d'autre de la zone d'appontage 12.

Au même titre que les poulies 72 disposées sur le chariot 16, les poulies de renvoi permettent de modifier l'orientation des câbles 74 tout en conservant l'effort que les treuils 68 appliquent aux câbles 74.

En pratique, les poulies de renvoi 22 sont amovibles et sont fixées à des fontaines prévues à cet effet sur le pont du navire en vue de la manutention d'un hélicoptère.

Le pupitre de commande 23 est configuré pour permettre la commande:
- de l'actionneur 56 pour la rotation de la vis mère 54 et donc le déplacement de la base 24 du chariot 16 par rapport à l'embase 26 et perpendiculairement à la piste 20,
- du système de traction pour le déplacement du chariot 16 sur la piste 20,
- des treuils 68 pour l'application d'un effort aux câbles 74, et
- du moteur 48 pour la rotation du pignon denté 46, de la couronne dentée 32, et du plateau 30.

En outre, le pupitre de commande 23 est configuré pour fournir à son opérateur une information de position angulaire du plateau 30 issue des capteurs 50.

A cet effet, le pupitre de commande comprend un ou plusieurs boutons, une ou plusieurs manettes et un ou plusieurs cadrans respectivement associés aux fonctions décrites ci-dessus.

Préférentiellement, le pupitre de commande 23 est portatif. Ceci permet à l'opérateur de pouvoir commander les éléments du dispositif 10 tout en en étant proche, ce qui améliore la précision avec laquelle l'opérateur peut interagir avec les éléments du dispositif 10, et plus particulièrement avec le plateau 30.

De manière connue, le système de traction comporte un ou plusieurs câbles s'étendant le long de la piste 20 ou intégrés dans la piste 20, par exemple au niveau des rails 21, et raccordés d'une part au chariot 16, et d'autre part à un moteur de traction (non représenté) situé dans la zone de stockage 76.

Le moteur de traction est commandable via le pupitre de commande 23 pour déplacer les câbles et le chariot 16 le long de la piste, et ce dans les deux sens.

Le fonctionnement du dispositif 10 va maintenant être décrit en référence aux Figures pour un hélicoptère pour lequel la traction de la roulette de nez via un effort appliqué à sa roulette de nez et dirigé selon l'axe T (Figure 3) du moyeu est à éviter.

En référence à la Figure 3, dans une configuration initiale, le chariot 16 est dans la zone de stockage 76 et y est maintenu, par exemple via un système de freinage automatique (non représenté) que le chariot comporte.

Un hélicoptère est apponté au niveau de la zone d'appontage 12, l'axe T du moyeu étant disposé par le pilote sensiblement selon l'axe principal de la cellule de l'hélicoptère.

Dans l'exemple de la Figure 3, la zone d'appontage 12 est munie d'une grille d'appontage avec laquelle l'hélicoptère est en prise au moyen d'un harpon porté par l'hélicoptère au niveau d'un point fort situé sous son fuselage. Une fois l'hélicoptère en prise avec la grille d'appontage, il peut néanmoins pivoter autour de son harpon. On désigne par C (Figure 4) le centre des rotations que l'hélicoptère peut effectuer. Ce centre de rotation C se situe sensiblement au niveau de l'intersection entre l'axe central de la cellule et l'axe du train arrière.

Une fois l'hélicoptère apponté et prêt à être manutentionné, en vue de la fixation de la roulette de nez sur le chariot 16, le chariot 16 est déplacé depuis la zone de stockage 76 jusqu'à la zone d'appontage 12, où il est ensuite immobilisé via son système de freinage.

En pratique, l'opérateur se trouve dans l'un de deux cas de figures suivants.

Dans un premier cas de figure illustré sur la Figure 3, l'hélicoptère a apponté de sorte que la roulette de nez ne se trouve pas sur la trajectoire du chariot 16 lorsqu'il se déplace sur la piste 20.

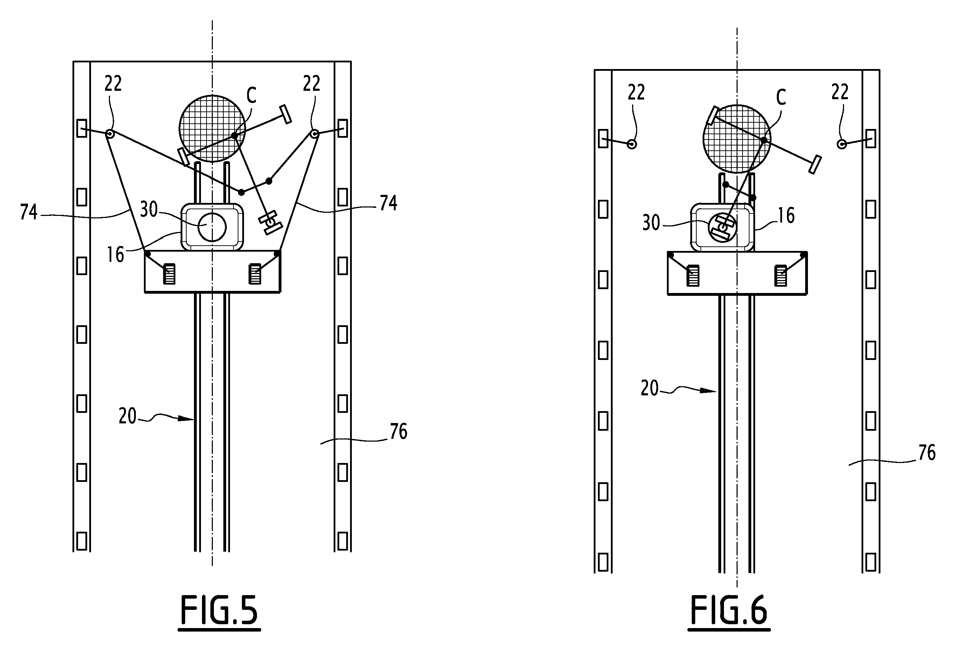

Dans ce cas de figure, en référence à la Figure 5, l'opérateur déplace le chariot 16 jusqu'à amener le plateau 30 à une distance du centre C sensiblement égale à la distance entre le centre C et la roulette de nez de l'hélicoptère.

L'opérateur déploie les câbles 74 qu'il engage dans les poulies 72 du chariot 16 ainsi que dans les poulies de renvoi 22 situées sur le pont du navire. Les organes de fixation situés aux extrémités des câbles 74 sont alors fixés sur des points spécifiques de l'hélicoptère prévus à cet effet et désignés par P sur les Figures.

L'opérateur commande alors les câbles 74 pour l'application d'un différentiel entre les efforts fournis par les câbles 74, ce qui induit la rotation contrôlée de l'hélicoptère autour du centre de rotation C. Les modules de limitation d'effort 70 limitent alors l'effort que les treuils 68 appliquent aux câbles 74 pour éviter d'endommager la structure de l'hélicoptère.

En référence à la Figure 5, par le pivotement contrôlé de l'hélicoptère, la roulette de nez est alors déplacée, via les pentes inclinées 36, depuis les abords de la piste 20 jusqu'à la surface centrale 28 de la base 24, puis jusqu'au plateau 30 du chariot 16.

En pratique, les pentes inclinées 36 sont pourvues d'indicateurs visuels aiguillant l'opérateur dans cette manoeuvre et lui permettant de s'assurer de la bonne position de l'hélicoptère sur le plateau 30.

A noter que la montée de la roulette de nez sur la base 24 via la pente inclinée 36 centrale du chariot 16 est difficile à réaliser via le seul déplacement du chariot 16 sous la roulette de nez du fait des pneumatiques de la roulette de nez qui se compriment et s'opposent à la montée de la roulette sur le chariot 16. Il est ainsi préférable de déplacer la roulette de nez sur la base 24 en empruntant une pente inclinée 36 latérale du chariot 16, et non en déplaçant la base 24 sous la roulette de nez.

Dans un deuxième cas de figure illustré sur la Figure 4, l'hélicoptère a apponté de sorte que sa roulette de nez se situe sur la trajectoire du chariot 16 sur la piste.

Aussi, dans un premier temps, l'opérateur amène le chariot 16 à proximité de l'hélicoptère puis, comme précédemment, y fixe les câbles 74.

Une fois les câbles 74 fixés à l'hélicoptère, l'hélicoptère est pivoté de sorte que sa roulette de nez soit dégagée de la trajectoire du chariot 16.

Puis le chariot 16 est alors déplacé sur la piste 20 jusqu'à ce que le plateau 30 se trouve à une distance du centre C sensiblement égale à la distance entre le centre de rotation C et la roulette de nez de l'hélicoptère.

L'opérateur se retrouve ainsi dans le premier cas de figure.

La roulette de nez est ensuite fixée au plateau 30.

Pour ce faire, les anneaux d'ancrage 42 et les crochets 43 des moyens de fixation 40 du plateau 30 sont fixés à la roulette de nez, par exemple en conjonction d'un élément complémentaire de fixation de la roulette sur le plateau 30, tel que par exemple une barre de rigidification en U fixée sur le moyeu de la roulette de nez, ou encore une cale, ou encore des sangles.

Les crochets 43 sont alors respectivement engagés dans l'un des anneaux d'ancrage 42 et dans un orifice dédié dans l'élément complémentaire de fixation. Ils sont alors ajustés.

Une fois la roulette de nez fixée sur le plateau 30, le plateau 30 et la roulette de nez sont immobilisés l'un par rapport à l'autre, notamment lors de la rotation du plateau 30. La rotation du plateau 30 induit alors la rotation de la roulette de nez et la réorientation de l'axe T du moyeu de la roulette de nez. L'opérateur détache les câbles 74 de l'hélicoptère et les enroule sur les treuils 68. En outre, le harpon est désengagé de la grille d'appontage. Puis l'opérateur translate la base 24 par rapport à l'embase 26 perpendiculairement à la piste 20 de façon à augmenter l'angle que fait l'axe principal de la cellule de l'hélicoptère avec la piste 20, comme illustré sur la Figure 6.

Pour ce faire, l'opérateur commande l'actionneur 56 pour la rotation de la vis mère 54, qui translate alors l'écrou 64 du fait de sa rotation, et avec lui la base 24.

Dans cette configuration dans laquelle la base 24 et la roulette de nez sont décalées latéralement par rapport au centre de la piste 20, la traction de l'hélicoptère le long de la piste accélère le recentrage de l'hélicoptère avec la piste 20 -c'est-à-dire la disposition du centre de rotation C au dessus du centre de la piste-, comparativement à une configuration sans translation de la base 24 par rapport à l'embase 26.

A noter que, du fait de la rotation préalable de l'hélicoptère pour le déplacement de la roulette de nez jusqu'au plateau 30, l'axe T du moyeu de la roue est bien sensiblement perpendiculaire à la trajectoire que décrit la roulette de nez lorsque la base 24 est translatée perpendiculairement à la piste. L'opérateur n'a donc pas besoin de pivoter le plateau 30.

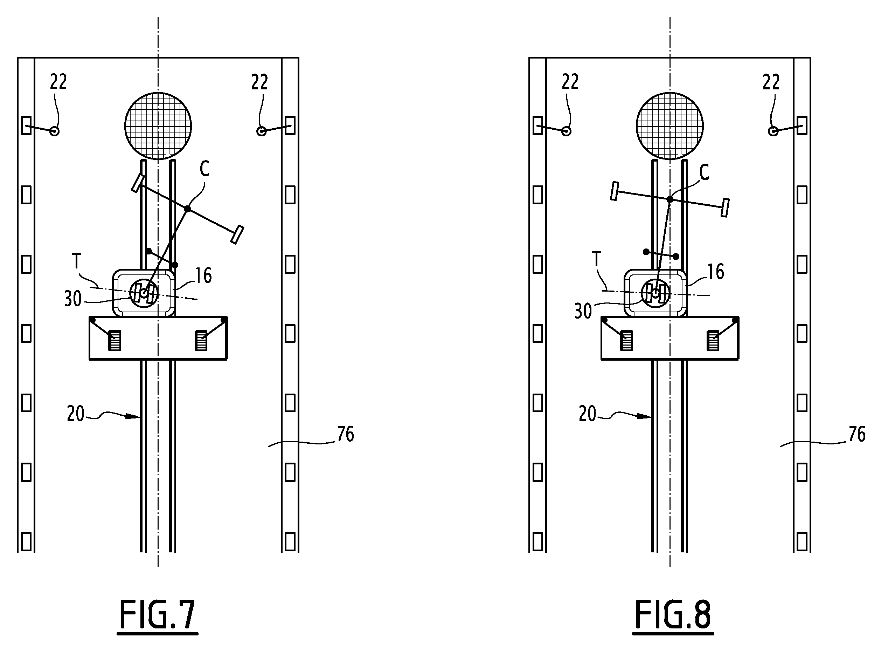

En revanche, comme illustré sur la Figure 7, une fois la base 24 translatée, en vue du déplacement de l'hélicoptère le long de la piste 20, l'opérateur commande la rotation du plateau 30 de sorte que lors de ce déplacement, l'effort de traction appliqué à la roulette de nez soit dirigé parallèlement aux plans des roues de la roulette et sensiblement perpendiculairement à l'axe T du moyeu.

Pour ce faire, via le pupitre de commande 23, l'opérateur actionne le moteur 48 qui fait tourner le pignon denté 46, et donc la couronne dentée 32 et le plateau 30 qui s'y trouve fixé.

Dans l'exemple de la Figure 7, le plateau 30 est ainsi pivoté d'environ 90° par l'opérateur.

Le chariot 16 est alors déplacé le long de la piste par l'opérateur jusqu'à ce que ce que le centre de rotation C de l'hélicoptère soit sensiblement centré sur la piste, comme illustré sur la Figure 8.

Le chariot 16 est ensuite immobilisé, puis le plateau 30 est de nouveau pivoté en vue du recentrage de la base 24 sur la piste 20.

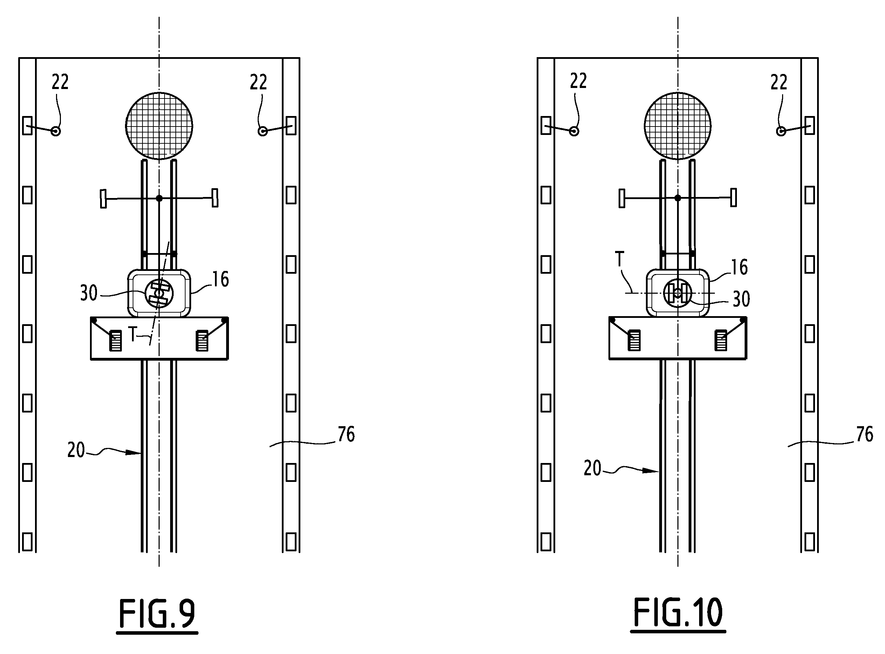

En référence à la Figure 9, le plateau 30 est pivoté de sorte que l'axe T du moyeu soit sensiblement tangent à l'arc que décrit la roulette de nez lorsque la base 24 est translatée perpendiculairement à la piste.

Une fois l'hélicoptère centré sur la piste 20, en vue de la traction de l'hélicoptère jusqu'à la zone de stockage 76, l'opérateur pivote le plateau 30 de sorte que l'axe T du moyeu soit sensiblement perpendiculaire à la piste 20, comme illustré sur la Figure 10.

Via le pupitre de commande 23, il commande alors le déplacement du chariot 16 et de l'hélicoptère jusqu'à la zone de stockage 76.

A l'inverse, pour déplacer l'hélicoptère depuis la zone de stockage 76 jusqu'à la zone d'appontage 12, le chariot 16 est déplacé sur la piste 20 jusqu'à ce que le harpon de l'hélicoptère puisse être mis en prise avec la grille d'appontage.

Lors de ce déplacement, comme précédemment, l'axe T du moyeu de la roulette de nez est disposé sensiblement perpendiculairement à la direction de déplacement du chariot 16 sur la piste 20.

Une fois l'hélicoptère sur la zone d'appontage 12, la roulette de nez est détachée du plateau 30.

Puis le chariot 16 est déplacé sur la piste 20 en direction de la zone de stockage 76, de sorte que la roulette de nez roule sur la surface centrale 28 de la base 24, puis s'engage sur la pente inclinée 36 centrale de la base 24 jusqu'à se dégager de la base 24.

Ainsi, les pentes inclinées 36 facilitent la descente de la roulette de nez de l'hélicoptère du chariot 16.

La présence du plateau 30 pour la réception de la roulette de nez permet un meilleur contrôle de la direction de l'effort appliqué à la roulette de nez de l'aéronef, notamment lors de chaque déplacement du chariot le long de la piste ou de la base 24 perpendiculairement à la piste. Ceci rend le dispositif 10 compatible avec un grand nombre d'hélicoptères indépendamment des limitations structurelles qui peuvent s'appliquer à leurs roulettes de nez.

En variante, l'hélicoptère présente une roulette de queue et un train d'atterrissage avant. Le dispositif 10 est alors également adapté pour manutentionner ce type d'appareil, la fixation de l'hélicoptère au plateau 30 se faisant par la roulette de queue, qui présente également des roues disposées sur un moyeu.

En outre, le fonctionnement a été décrit pour un hélicoptère muni d'un harpon et apponté sur une grille. Toutefois, cette caractéristique n'ayant pas de répercussion sur le fonctionnement du dispositif 10, le dispositif 10 est également adapté pour la manutention d'hélicoptères ne disposant pas de tels harpons et n'appontant pas sur une grille.

En outre, même s'ils sont particulièrement adaptés pour être mis en oeuvre à bord d'un navire, le dispositif 10 et son fonctionnement ne sont pas restreints à une mise en oeuvre dans ce type d'environnement, et sont également adaptés pour être mis en oeuvre sur une zone d'atterrissage et d'envol classique plutôt que sur une zone d'appontage.

## Revendications

1. Dispositif de manutention pour aéronef comprenant au moins une roulette de nez et étant situé sur une aire d'atterrissage ou d'appontage (14), le dispositif de manutention (10) comprenant :
- une piste (20) agencée sur l'aire d'atterrissage ou d'appontage (14),
- un chariot (16) déplaçable sur la piste (20) et adapté pour déplacer l'aéronef sur la piste (20),
- ledit chariot (16) comprenant un plateau tournant (30) pour la réception de la roulette de nez, le plateau tournant (30) étant agencé sur le chariot (16) et étant monté pivotant par rapport au chariot (16), de sorte que le plateau (30) et la roulette de nez sont orientables par rapport au chariot (16) et à la piste (20),
le chariot (16) comprenant en outre une base de support (24) sur laquelle le plateau tournant (30) est disposé,
**caractérisé en ce que** le chariot (16) comprend en outre une embase de guidage (26) pour le guidage du chariot (16) sur la piste (20) et des moyens de déplacement (27) pour lier la base de support (24) à l'embase de guidage (26), la base de support (24) étant déplaçable via les moyens de déplacement (27) en translation par rapport à l'embase de guidage (26) et perpendiculairement à la piste (20).

2. Dispositif de manutention selon la revendication 1, **caractérisé en ce que** le chariot (16) comprend en outre des moyens d'entraînement (34) configurés pour entraîner le plateau tournant (30) en rotation.

3. Dispositif de manutention selon la revendication 2, **caractérisé en ce que** les moyens d'entraînement (34) comprennent une couronne dentée (32), la couronne dentée (32) et le plateau tournant (30) étant solidaires en rotation l'un de l'autre.

4. Dispositif de manutention selon la revendication 3, **caractérisé en ce que** les moyens d'entraînement (34) comprennent en outre un pignon denté (46) en prise avec la couronne dentée (32), et un moteur (48) propre à entraîner le pignon denté (46) en rotation.

5. Dispositif de manutention selon la revendication 3 ou 4, **caractérisé en ce que** les moyens d'entraînement (34) comprennent en outre des capteurs de position (50) agencés sur la couronne dentée (32) et propres à fournir une information de position angulaire de la couronne dentée (32).

6. Dispositif de manutention selon l'une quelconque des revendications précédentes, **caractérisé en ce que** le plateau tournant (30) comprend des moyens de fixation (40) pour la fixation de la roulette de nez sur le plateau tournant (30) et l'immobilisation du plateau tournant (30) et de la roulette de nez l'un par rapport à l'autre.

7. Dispositif de manutention selon l'une quelconque des revendications précédentes, **caractérisé en ce que** le chariot (16) comporte une surface centrale (28) surélevée par rapport à l'aire d'atterrissage ou d'appontage (14) et à la piste (20) et sur laquelle le plateau tournant (30) est agencé, ainsi qu'au moins une pente inclinée (36), chaque pente inclinée (36) joignant un bord périphérique du chariot (16) à ladite surface centrale (28).

8. Dispositif selon l'une quelconque des revendications précédentes, **caractérisé en ce que** les moyens de déplacement (27) comprennent un écrou (64) fixé sur une plaque de fixation (62) solidaire de la base de support (24), **en ce que** l'embase de support (26) comprend des moyens de guidage (53) comportant une vis mère (54) actionnable en rotation et **en ce que** l'écrou (64) reçoit la vis mère (54).

9. Dispositif de manutention selon l'une quelconque des revendications précédentes, **caractérisé en ce qu'**il comprend en outre un ou plusieurs treuils (68) disposés sur le chariot (16).

10. Dispositif de manutention selon l'une quelconque des revendications précédentes, **caractérisé en ce qu'**il comprend également un pupitre de commande (23) portatif configuré pour commander au moins la rotation du plateau tournant (30) et le déplacement du chariot (16) sur la piste (20).

## Patentansprüche

1. Beförderungs-Vorrichtung für ein Luftfahrzeug, welches wenigstens ein Bugrad aufweist und auf einem Flug- oder Landeplatz (14) angeordnet ist, wobei die BeförderungsVorrichtung (10) aufweist:
- eine Bahn (20), die auf dem Flug- oder Landeplatz (14) bereitgestellt ist,
- einen Wagen (16), der auf der Bahn (20) verlagerbar ist und der eingerichtet ist zum Verlagern des Luftfahrzeugs auf der Bahn (20),
- wobei der Wagen (16) aufweist
eine drehbare Platte (30) für die Aufnahme des Bugrads, wobei die drehbare Platte (30) auf dem Wagen (16) bereitgestellt ist und bezüglich des Wagens (16) schwenkbar montiert ist, sodass die Platte (30) und das Bugrad bezüglich des Wagens (16) und der Bahn (20) verstellbar sind,
wobei der Wagen (16) ferner aufweist
eine Stützbasis (24), auf welcher die drehbare Platte (30) angeordnet ist,
**dadurch gekennzeichnet, dass** der Wagen (16) ferner aufweist einen Führungssockel (26) für die Führung des Wagens (16) auf der Bahn (20) und Verlagerungsmittel (27) zum Verbinden der Stützbasis (24) mit dem Führungssockel (26), wobei die Stützbasis (24) mittels der Verlagerungsmittel (27) translatorisch bezüglich des Führungssockels (26) und senkrecht zur Bahn (20) verlagerbar ist.

2. Beförderungs-Vorrichtung gemäß Anspruch 1, **dadurch gekennzeichnet, dass** der Wagen (16) ferner aufweist Antriebsmittel (34), die zum drehenden Antreiben der drehbaren Platte (30) konfiguriert sind.

3. Beförderungs-Vorrichtung gemäß Anspruch 2, **dadurch gekennzeichnet, dass** die Antriebsmittel (34) einen Zahnkranz (32) aufweisen, wobei der Zahnkranz (32) und die drehbare Platte (30) bezüglich einander drehfest sind.

4. Beförderungs-Vorrichtung gemäß Anspruch 3, **dadurch gekennzeichnet, dass** die Antriebsmittel (34) ferner aufweisen ein Zahnrad (46), welches mit dem Zahnkranz (32) im Eingriff ist, und einen Motor (48), der in der Lage ist, das Zahnrad (46) drehanzutreiben.

5. Beförderungs-Vorrichtung gemäß Anspruch 3 oder 4, **dadurch gekennzeichnet, dass** die Antriebsmittel (34) ferner aufweisen Positionssensoren (50), die an dem Zahnkranz (32) bereitgestellt sind und die in der Lage sind, eine Winkelpositions-Information des Zahnkranzes (32) zu liefern.

6. Beförderungs-Vorrichtung gemäß irgendeinem der vorhergehenden Ansprüche, **dadurch gekennzeichnet, dass** die drehbare Platte (30) Befestigungsmittel (40) für die Befestigung des Bugrads an der drehbaren Platte (30) und die Immobilisierung der drehbaren Platte (30) und des Bugrads bezüglich einander aufweist.

7. Beförderungs-Vorrichtung gemäß irgendeinem der vorhergehenden Ansprüche, **dadurch gekennzeichnet, dass** der Wagen (16) aufweist eine zentrale Fläche (28), die bezüglich des Flug- oder Landeplatzes (14) und der Bahn (20) höher liegt und auf welcher die drehbare Platte (30) bereitgestellt ist, sowie wenigstens eine Schrägneigung (36), wobei jede Schrägneigung (36) einen Umfangsrand des Wagens (16) mit der besagten zentralen Fläche (28) verbindet.

8. Vorrichtung gemäß irgendeinem der vorhergehenden Ansprüche,
**dadurch gekennzeichnet, dass** die Verlagerungsmittel (27) eine Mutter (64) aufweisen, die an einer Befestigungsplatte (62) befestigt ist, die fest mit der Stützbasis (24) verbunden ist, und dass der Stützsockel (26) Führungsmittel (53) aufweist, die eine Gewindespindel (54) aufweisen, die drehbetätigbar ist, und dass die Mutter (64) die Gewindespindel (54) aufnimmt.

9. Beförderungs-Vorrichtung gemäß irgendeinem der vorhergehenden Ansprüche, **dadurch gekennzeichnet, dass** sie ferner eine oder mehrere Winden (68) aufweist, die an dem Wagen (16) angeordnet sind.

10. Beförderungs-Vorrichtung gemäß irgendeinem der vorhergehenden Ansprüche, **dadurch gekennzeichnet, dass** sie auch aufweist einen tragbaren Steuerpult (23), der konfiguriert ist zum Steuern von wenigstens der Drehung der drehbaren Platte (30) und der Verlagerung des Wagens (16) auf der Bahn (20).

## Claims

1. A handling device for aircraft comprising at least one nose wheel and being located on a landing or alighting area (14), said handling device (10) comprising:
- a track (20) arranged on said landing or alighting area (14);
- a carriage (16) that can move on said track (20) and is adapted to move said aircraft on said track (20);
- said carriage (16) comprising
a turntable (30) for receiving said nose wheel, said turntable (30) being arranged on said carriage (16) and being pivotally mounted relative to said carriage (16), so that said turntable (30) and said nose wheel can be oriented relative to said carriage (16) and to said track (20),
said carriage (16) further comprising
a support base (24), on which said turntable (30) is disposed,
**characterised in that** said carriage (16) further comprises a guide base (26) for guiding said carriage (16) on said track (20) and movement means (27) for linking said support base (24) to said guide base (26), said support base (24) being able to move via said movement means (27) translationally relative to said guide base (26) and at a right angle to said track (20).

2. A handling device according to claim 1,
**characterised in that** said carriage (16) further comprises drive means (34) configured to rotationally drive said turntable (30).

3. A handling device according to claim 2,
**characterised in that** said drive means (34) comprise a toothed gear (32), said toothed gear (32) and said turntable (30) being rotationally integral with each other.

4. A handling device according to claim 3,
**characterised in that** said drive means (34) further comprise a toothed pinion (46) engaged with said toothed gear (32), and a motor (48) capable of rotationally driving said toothed pinion (46).

5. A handling device according to claim 3 or 4,
**characterised in that** said drive means (34) further comprise position sensors (50) arranged on said toothed gear (32) and capable of providing angular position information of said toothed gear (32).

6. A handling device according to any one of the preceding claims, **characterised in that** said turntable (30) comprises fixing means (40) for fixing said nose wheel to said turntable (30) and for immobilising said turntable (30) and said nose wheel relative to each other.

7. A handling device according to any one of the preceding claims, **characterised in that** said carriage (16) comprises a central surface (28), which is raised relative to said landing or alighting area (14) and to said track (20) and on which said turntable (30) is arranged, as well as at least one sloping gradient (36), with each sloping gradient (36) joining a peripheral edge of said carriage (16) to said central surface (28).

8. A device according to any one of the preceding claims, **characterised in that** said movement means (27) comprise a nut (64) fixed on a fixing plate (62) that is integral with said support base (24), **in that** said support base (26) comprises guide means (53) comprising a rotationally operable lead-screw (54) and **in that** said nut (64) receives said lead-screw (54).

9. A handling device according to any one of the preceding claims, **characterised in that** it further comprises one or more winches (68) disposed on said carriage (16).

10. A handling device according to any one of the preceding claims, **characterised in that** it also comprises a portable control console (23) configured to control at least the rotation of said turntable (30) and the movement of said carriage (16) on said track (20).
